# EUROPÄISCHE PATENTSCHRIFT

(11) **EP 2 314 452 B1**
(45) Veröffentlichungstag und Bekanntmachung des Hinweises auf die Patenterteilung: **28.12.2011**
(21) Anmeldenummer: 09013199.6
(22) Anmeldetag: 20.10.2009
(51) Int. Cl.: B32B 27/08

(54) **Coextrusionsfolie und Verfahren zur Herstellung eines Verbundstoffes**
Coextrusion film and method for manufacturing a compound material
Feuille de coextrusion et procédé de fabrication d'un matériau de liaison

(43) Veröffentlichungstag der Anmeldung: 27.04.2011
(73) Patentinhaber: Nordenia Deutschland Gronau GmbH, 48599 Gronau (DE)
(72) Erfinder: Sollmann, Henner, 48599 Gronau (DE)
(74) Vertreter: Albrecht, Rainer Harald

(56) Entgegenhaltungen:
- DE-A1-102006 040 846

## Beschreibung

Die Erfindung betrifft eine Coextrusionsfolie, welche eine Schicht aus thermoplastischem Elastomer aufweist. Die Coextrusionsfolie ist für die Herstellung von Verbundstoffelementen vorgesehen, wobei insbesondere eine Kaschierung mit einem dehnbaren aber üblicherweise nicht elastischen Nonwovenmaterial vorgesehen ist. Ein solcher Kaschierverbund kann beispielsweise als elastisches Tape oder als elastischer Gurt von Einweg-Hygieneprodukten wie Babywindeln oder vergleichbaren Inkontinenzartikeln vorgesehen sein. Die Elastizität des Kaschierverbundes wird dabei durch die Schicht aus thermoplastischem Elastomer erreicht.

Bei der Herstellung einer Monofolie aus thermoplastischem Elastomer besteht das Problem, dass die bei der Handhabung wirkenden Zugkräfte gering gehalten werden müssen, um eine starke Dehnung oder ein Zerreißen sicher zu vermeiden. Thermoplastische Elastomere weisen des Weiteren eine erhebliche Klebrigkeit auf und können nach dem Aufwickeln auf eine Rolle schnell verblocken, so dass eine Lagerung von Monofolien aus thermoplastischem Elastomer in Form von Rollen nicht ohne weiteres möglich ist.

Aus der EP 1 316 418 B1 ist eine Coextrusionsfolie bekannt, welche eine Kernschicht aus einem thermoplastischen Elastomer und zumindest eine Skinschicht aufweist. Bei einem Aufrollen der Coextrusionsfolie wirkt die Skinschicht als Trennung und verhindert so, dass die auf der Rolle übereinander gewickelten Lagen der klebrigen Kernschicht in einen direkten Kontakt kommen, so dass ein Verblocken vermieden werden kann. Auch wenn sich die bekannte Coextrusionsfolie in der Praxis bewährt hat, besteht der Nachteil, dass zunächst eine Versprödung der Skinschicht und nachfolgend in einem zusätzlichen Verfahrensschritt eine Aktivierung der Coextrusionsfolie durch eine Überdehnung erforderlich ist, bei der die zumindest eine steife Außenschicht in Dehnungsrichtung streifenförmig aufreißt. Senkrecht zu dieser Dehnungsrichtung bleibt die Coextrusionsfolie steif.

Aus der EP 1 686 209 B1 ist bekannt eine Monofolie aus einem klebrigen thermoplastischen Elastomer unmittelbar nach der Extrusion mit einer dünnen nicht blockenden Schicht aus Nonwoven zu kaschieren, welche einerseits die elastische Monofolie bei der Handhabung vor einer übermäßigen Dehnung schützt und andererseits bei einem Aufrollen ein Verblocken verhindert. Da bereits unmittelbar nach der Extrusion der Monofolie ein Nonwovenmaterial zugeführt und aufkaschiert werden muss, ist das Verfahren aufwendig. Des Weiteren ist das Einsatzgebiet des gebildeten Kaschierverbundes als Vorprodukt durch die zumindest an einer Seite vorgesehene Außenschicht aus Nonwoven eingeschränkt.

Um ein Verblocken klebriger Monofolien aus thermoplastischem Elastomer zu vermeiden ist des Weiteren bekannt, diese nach der Extrusion mit einem Puder zu versehen. Gemäß der EP 1 712 669 B1 wird dazu ein Puder aus polymerem Material verwendet, welches bei einer Kaschierung der elastischen Monofolie mit einem Deckmaterial durch Hotmeltklebstoff aufschmilzt, wodurch die zu erreichende Verbundfestigkeit durch das Puder nicht wesentlich beeinträchtigt wird. Das beschriebene Verfahren setzt voraus, dass die elastische Monofolie mit dem Deckmaterial durch Hotmeltklebstoff verbunden wird, wobei auch die Verklebungstemperatur des Hotmeltklebstoffes einerseits und die Schmelztemperatur des Puders andererseits aufeinander abgestimmt werden müssen. Des Weiteren verhindert das Puder zwar ein Verblocken der Monofolie aus thermoplastischem Elastomer bei der Lagerung im aufgerollten Zustand, jedoch müssen bei der Handhabung der Monofolie die wirkenden Zugkräfte gering gehalten werden, um eine unkontrollierte Dehnung oder ein Zerreißen zu vermeiden.

Vor diesem Hintergrund liegt der Erfindung die Aufgabe zugrunde, eine Coextrusionsfolie mit einer elastischen Schicht anzugeben, die auf eine Rolle aufgerollt und gelagert werden kann, leicht zu handhaben ist und ohne eine Beeinträchtigung der Elastizität vielseitig eingesetzt werden kann.

Zur Lösung dieser Aufgabe ist gemäß einer ersten Ausgestaltung der Erfindung eine Coextrusionsfolie vorgesehen, die an einem inneren Schichtübergang in eine einschichtige elastische Folie aus thermoplastischem Elastomer und eine Stützfolie trennbar ist, wobei die elastische Folie eine erste Oberfläche der Coextrusionsfolie bildet und wobei die Stützfolie an dem inneren Schichtübergang eine Releaseschicht aus nicht elastischem polaren Polymer aufweist. Erfindungsgemäß wird die Schicht aus thermoplastischem Elastomer bereits unmittelbar nach dem Düsenaustritt bei der Coextrusion durch die angrenzende ein- oder mehrschichtige Stützfolie stabilisiert. Ohne eine zusätzliche Behandlung oder Beschichtung kann die gebildete Coextrusionsfolie aufgerollt werden, wobei die Stützfolie ein Verblocken im aufgerollten Zustand sicher vermeidet. Gleichzeitig weist die Coextrusionsfolie eine hohe Zugfestigkeit auf, so dass eine übermäßige Dehnung oder ein Zerreißen auch bei erhöhten Zugkräften vermieden werden. Um die einschichtige elastische Folie aus thermoplastischem Elastomer beispielsweise als elastische Lage eines Verbundstoffelementes nutzen zu können, kann diese an dem inneren Schichtübergang von der Stützfolie getrennt werden.

Die beschriebenen Releaseeigenschaften können durch Polaritätsunterschiede zwischen der elastischen Folie einerseits und der Releaseschicht der Stützfolie andererseits erreicht werden. Während erfindungsgemäß die Releaseschicht aus einem nicht elastischen polaren Polymer besteht, ist das thermoplastische Elastomer unpolar oder weist lediglich eine geringere Polarität auf. So kann die elastische Folie beispielsweise aus einem Styrol-Block-Copolymer, insbesondere Styrol-Butadien-Styrol-Copolymer (SBS), Styrol-Isopren-Styrol-Block-Copolymer (SIS), Styrol-Ethen Buten-Styrol-Copolymer (SEBS) oder Mischungen zumindest zwei der genannten Styrol-Block-Copolymere bestehen. In üblicher Weise können Beimischungen von Zusätzen oder Füllstoffen vorgesehen sein.

Gemäß einer zweiten Ausgestaltung wird die der Erfindung zugrunde liegende Aufgabe durch eine Coextrusionsfolie gelöst, die an einem inneren Schichtübergang in eine dehnbare Folie und eine Stützfolie trennbar ist, wobei die dehnbare Folie eine elastische Schicht aus thermoplastischem Elastomer sowie eine Schicht aus dehnbarem Polymer aufweist und wobei die Stützfolie an dem inneren Schichtübergang eine Releaseschicht aus nicht elastischem polaren Polymer aufweist.

Vorzugsweise ist vorgesehen, dass die Schicht aus dehnbarem Polymer an den inneren Schichtübergang der Coextrusionsfolie angrenzt, wobei auch dann, wie zuvor im Hinblick auf die erste Ausgestaltung beschrieben, die Releaseeigenschaften durch unterschiedliche Polaritäten zwischen der Schicht aus dehnbarem Polymer einerseits und der angrenzenden Releaseschicht andererseits erreicht werden können. Insbesondere kann die Schicht aus dehnbarem Polymer aus einem Polyolefin wie Polyethylen gebildet sein, welches vollständig unpolar ist. Die zusätzliche Schicht aus dehnbarem Polymer ist dazu vorgesehen die elastische Schicht aus thermoplastischem Elastomer nach der Trennung von der Releaseschicht in einem gewissen Maße zu stabilisieren. Da nach der Abtrennung der Stützfolie eine leichte Dehnbarkeit angestrebt wird und nach einer Dehnung die elastische Rückstellung der Schicht aus thermoplastischem Elastomer durch die zusätzliche dehnbare Schicht nicht wesentlich beeinträchtigt werden soll, bewirkt die Schicht aus dehnbarem Polymer nur eine leichte Stabilisierung, die bei geringen Zugkräften einer starken Dehnung entgegenwirkt. Aus diesem Grund weist die dehnbare Schicht vorzugsweise nur eine geringe Dicke von weniger als 20 µm, besonders bevorzugt weniger als 10 µm auf.

Sowohl im Rahmen der ersten als auch der zweiten Ausgestaltung der Erfindung wird eine Abtrennbarkeit der Stützfolie vorzugsweise durch die Einstellung unterschiedlicher Polaritäten der an dem inneren Schichtübergang aneinander liegenden Schichten erreicht. Die Releaseschicht soll eine ausreichende Festigkeit aufweisen, um eine problemlose Handhabung der Coextrusionsfolie zu gewährleisten und um die Stützfolie ohne ein Zerreißen von der elastischen Folie abziehen zu können. Andererseits darf die Stützfolie nicht zu steif sein. Zusätzlich wird insgesamt ein möglichst geringer Materialbedarf angestrebt, insbesondere da die Stützfolie nach dem Abtrennen üblicherweise ohne eine weitere Nutzung entsorgt oder recycelt werden muss. Die Dicke der Releaseschicht liegt deshalb bevorzugt zwischen 2 µm und 100 µm. Bei der Festlegung einer geeigneten Dicke ist auch zu berücksichtigen, ob die Stützfolie einschichtig allein aus der Releaseschicht gebildet ist oder zumindest eine weitere Schicht aufweist.

Erfindungsgemäß ist die Coextrusionsfolie in eine Stützfolie einerseits und eine einschichtige elastische Folie bzw. eine dehnbare Folie mit einer Schicht aus thermoplastischem Elastomer andererseits trennbar. Die Releaseeigenschaften sind dabei so eingestellt, dass die beiden gebildeten Folien bei dem Trennvorgang nicht zerreißen und auch voneinander getrennt gehandhabt werden können. Die nach DIN 53 357-A bestimmte Verbundhaftung liegt üblicherweise zwischen 0,005 N/25 mm und 4 N/25 mm. Der beschriebene Pealwert ist so eingestellt, dass einerseits bei der Handhabung der Coextrusionsfolie die Stützfolie und die elastische Folie bzw. dehnbare Folie zumindest leicht aneinander haften und andererseits die Stützfolie leicht abgezogen werden kann. Für viele Anwendungen soll insbesondere eine übermäßige Dehnung der elastischen bzw. dehnbaren Folie beim Abziehen aufgrund erhöhter Zugkräfte vermieden werden. Der bevorzugte Bereich für den Peel-Wert liegt zwischen 0,01 N/25 mm und 1 N/25 mm.

Um die erfindungsgemäß vorgesehene Auftrennung der Coextrusionsfolie zu ermöglichen ist die Releaseschicht aus einem nicht elastischen polaren Polymer gebildet. Geeignet sind beispielsweise Polyamide (PA) mit ihrer stark polaren Amidgruppe, Polymethylmethacrylat (PMMA), Polyoxymethylen (POM) sowie Ester-Thermoplaste, wie Polycarbonat (PC), Polyethylenterephthalat (PET) und Polybutylenterephthalat (PBT). Des Weiteren können auch zumindest zwei der genannten Polymere und/oder verschiedene Typen der genannten Polymere als Mischung vorgesehen sein.

Wenn die Stützfolien als Monofolie ausschließlich aus der Releaseschicht besteht, weist diese vorzugsweise eine erhöhte Dicke auf, um eine ausreichende Stabilisierung der elastischen Folie bzw. der dehnbaren Folie zu bewirken. Wenn die Stützfolie dagegen mehrschichtig ausgebildet ist, kann eine funktionelle Aufteilung erreicht werden, wobei eine zusätzliche Trägerschicht zumindest wesentlich zu der Abstützung und Versteifung der Coextrusionsfolie beiträgt. Die Releaseschicht kann dann entsprechend dünner ausgeführt werden und weist bevorzugt eine Dicke von weniger als 20 µm, besonders bevorzugt weniger als 10 µm auf. Zu berücksichtigen ist, dass die thermoplastischen Polymere mit einer hohen Polarität üblicherweise vergleichsweise teuer sind, so dass durch die beschriebene funktionelle Aufteilung eine Kostenreduzierung erreicht werden kann. So kann die Trägerschicht als polymere Grundsubstanz ein kostengünstiges Polyolefin aufweisen und durch eine dünne Haftvermittlerschicht mit der Releaseschicht verbunden sein.

Gegenstand der Erfindung ist auch ein Verfahren zur Herstellung eines Verbundstoffes, wobei eine Coextrusionsfolie gebildet wird, die an einer ersten Oberfläche eine Schicht aus thermoplastischem Elastomer aufweist und die an einem inneren Schichtübergang in eine die Schicht aus elastischem Elastomer umfassende Folie und eine Stützfolie trennbar ist, wobei die Coextrusionsfolie auf einer Rolle aufgewickelt wird, wobei die Coextrusionsfolie von der Rolle abgezogen wird, wobei zumindest eine Nonwovenbahn zugeführt wird und wobei die Stützfolie entfernt wird, unmittelbar bevor die Nonwovenbahn mit der nach der Abtrennung der Stützfolie verbleibenden Folie kaschiert wird, welche die Schicht aus thermoplastischem Elastomer aufweist.

Im Rahmen des erfindungsgemäßen Verfahrens kann die Coextrusionsfolie wie zuvor beschrieben ausgebildet sein.

Wie zuvor erläutert, bewirkt die Stützfolie eine Stabilisierung der Schicht aus thermoplastischem Elastomer, so dass die gesamte Coextrusionsfolie auch bei großen Zugkräften leicht gehandhabt und weiter verarbeitet werden kann. So kann die Coextrusionsfolie beispielsweise vor dem Abtrennen der Stützfolie in Streifen geschnitten werden, wobei die nach dem Abziehen der Stützfolie verbleibenden Streifen der Folie voneinander in Querrichtung beabstandet zwischen zwei flächigen nicht elastische Nonwovenbahnen einkaschiert werden, so dass sich in Querrichtung Bereiche, die nach einer Dehnung eine elastische Rückstellung aufweisen, mit nicht elastischen Bereichen abwechseln.

Da die Schicht aus thermoplastischem Elastomer unmittelbar nach der Extrusion durch die Stützfolie stabilisiert ist, kann die Schicht aus thermoplastischem Elastomer gegenüber den bekannten Ausführungen auch eine reduzierte Dicke aufweisen, wodurch sich insgesamt ein Kostenvorteil ergibt.

Gegenstand der Erfindung ist auch eine Verwendung einer Coextrusionsfolie für die Herstellung von Verbundstoffelementen nach Anspruch 15 und 16.

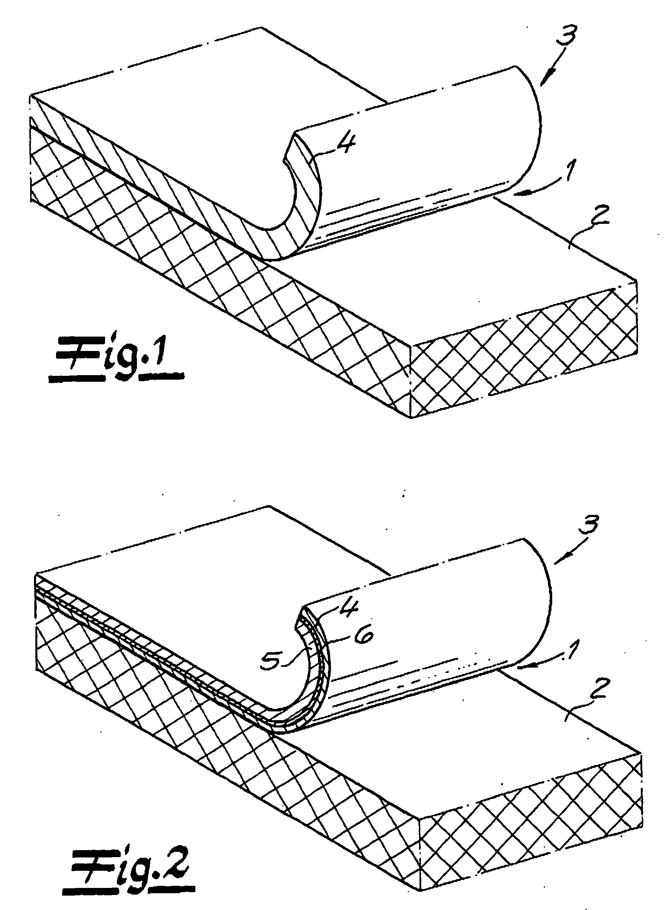

Die Erfindung wird im Folgenden anhand von Ausführungsbeispielen erläutert. Die Fig. 1 bis 4 zeigen alternative Ausgestaltungen von erfindungsgemäßen Coextrusionsfolien.

Fig. 1 zeigt eine zweischichtige Ausgestaltung einer Coextrusionsfolie, die an einem inneren Schichtübergang 1 in eine elastische Folie 2 und eine Stützfolie 3 trennbar ist. Die elastische Folie 2 besteht aus einer einzigen Schicht eines thermoplastischen Elastomers, beispielsweise einem Styrol-Block-Copolymer, welches aufgrund seiner elastischen Eigenschaften eine hohe Klebrigkeit aufweist. Um eine Abtrennung von der elastischen Folie 2 zu ermöglichen, besteht die Stützfolie 3 in dem Ausführungsbeispiel der Fig. 1 aus einer Releaseschicht 4, die aus einem nicht elastischen polaren Polymer gebildet ist. Neben der Ermöglichung einer Trennung dient die Stützfolie 3 auch einer Stabilisierung der elastischen Folie 2, so dass die gesamte Coextrusionsfolie auch bei erhöhten Zugkräften ohne eine wesentliche Dehnung leicht gehandhabt werden kann.

Um beispielsweise Verbundstoffelemente für Einweg-Hygieneartikel zu bilden, kann die elastische Folie 2 nach der Entfernung der Stützfolie 3 mit einem Nonwovenmaterial kaschiert werden.

Im Unterschied zu der Ausgestaltung gemäß der Fig. 1 zeigt die Fig. 2 eine Coextrusionsfolie mit einer mehrschichtigen Stützfolie 3. Die Stützfolie 3 umfasst eine Releaseschicht 4, welche an die elastische Folie 2 angrenzt, sowie eine Trägerschicht 5, die über eine Haftvermittlerschicht 6 mit der Releaseschicht 4 verbunden ist. Die zusätzliche Trägerschicht 5 führt zu einer Verstärkung der Stützfolie 3, so dass die Releaseschicht 4 entsprechend dünner ausgeführt werden kann. Entsprechend ergibt sich der Vorteil, dass der Bedarf an vergleichsweise teurem polaren Polymer für die Releaseschicht 4 reduziert ist.

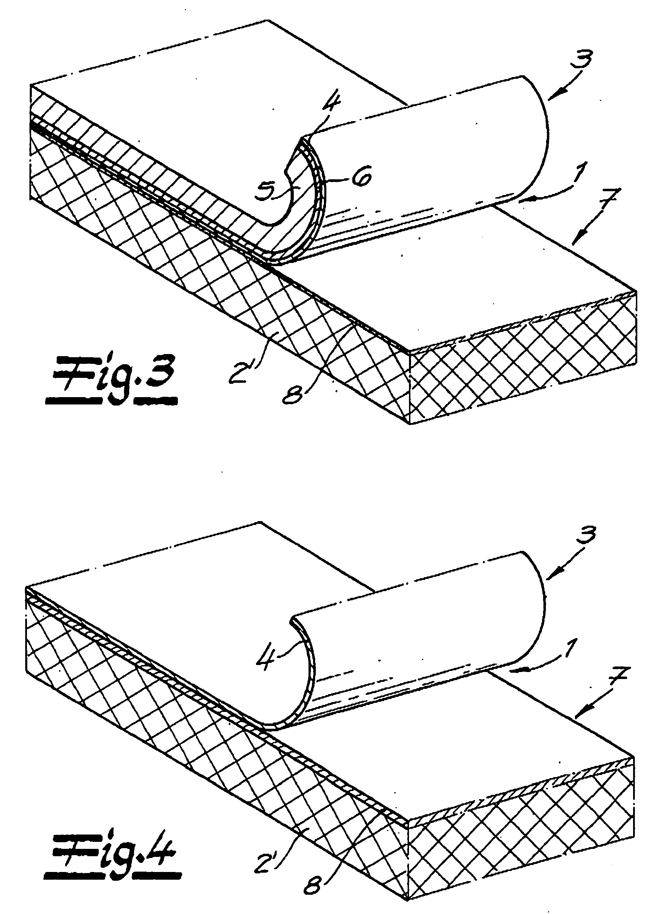

Die Fig. 3 und 4 zeigen weitere Ausgestaltungen der Erfindung, wobei die jeweils dargestellte Coextrusionsfolie an einem inneren Schichtübergang 1 in eine dehnbare Folie 7 und eine Stützfolie 3 trennbar ist. Die dehnbare Folie 7 umfasst eine elastische Schicht 2' aus thermoplastischem Elastomer sowie eine Schicht 8 aus dehnbarem Polymer. Die Stützfolie 3 kann wie zuvor beschrieben ein- oder mehrschichtig ausgebildet sein. Die zusätzliche Schicht 8 aus dehnbarem Polymer ist dazu vorgesehen, nach der Abtrennung der Stützfolie 3 der elastischen Schicht 2' noch eine gewisse Stabilität zu verleihen. Die nach dem Abtrennen der Stützfolie 3 verbleibende dehnbare Folie 7 soll dennoch leicht gedehnt werden können, um nach der Kaschierung mit einem Nonwovenmaterial zur Bildung eines dehnbaren Elementes für einen Hygieneartikel gute elastische Eigenschaften aufzuweisen. Die Schicht 8 aus dehnbarem Polymer weist deshalb üblicherweise eine Dicke von weniger als 20 µm, vorzugsweise weniger als 10 µm auf.

Die Fig. 4 zeigt eine Ausgestaltung mit einer zweischichtigen dehnbaren Folie 7 sowie einer Stützfolie 3, die ausschließlich aus der Releaseschicht 4 besteht.

Im Rahmen orientierender Versuche wurden Coextrusionsfolien mit einem Schichtaufbau gemäß den Fig. 1 bis 4 gefertigt, wobei als elastische Folie 2 bzw. elastische Schicht 2' stets eine 70 µm dicke Schicht aus Styrol-Block-Copolymer gebildet wurde.

Gemäß einem ersten Beispiel wurde die klebrige, elastische Schicht aus Styrol-Block-Copolymer gemeinsam mit einer 30 µm dicken Schicht aus Polyamid als Trägerschicht 5 coextrudiert.

Gemäß einem zweiten Beispiel erfolgte die Bildung einer insgesamt vierschichtigen Coextrusionsfolie, wobei die Stützfolie 3 eine 10 µm dicke Polyamidschicht (PA) und eine 15 µm dicke Trägerschicht aus Polyethylen mittlerer Dichte (PE-MD) aufwies, die über eine 5 µm dicke Schicht eines Maleinsäureanhydrid-modifizierten linearen Polyethylens niedriger Dichte (MAH-modifiziertes PE-LLD) als Haftvermittlerschicht 6 mit der Releaseschicht 4 verbunden war.

Bei einem Ausführungsbeispiel gemäß der Fig. 3 wurde eine zweischichtige dehnbare Folie gebildet, die neben der 70 µm dicken elastischen Schicht 2' aus Styrol-Block-Copolymer eine 3 µm dicke dehnbare Schicht 8 aus Polyethylen mittlerer Dichte (PE-MD) aufwies. Die Releaseschicht 4 der dreischichtigen Stützfolie 3 wurde aus Polycarbonat (PC) mit einer Dicke 5 µm gebildet, wobei die Releaseschicht 4 über eine 10 µm dicke Haftvermittlerschicht aus MAHmodifizierten PE-LLD an eine 28 µm dicken Trägerschicht aus PE-MD anschließt.

Bei einem Beispiel gemäß der Fig. 4 wurde eine zweischichtige dehnbare Folie mit einer elastischen Schicht 2' und einer zusätzlichen 10 µm dicken dehnbaren Schicht 8 aus PE-MD gemeinsam mit einer 5 µm dicken Stützfolie aus Polycarbonat (PC) coextrudiert.

Sämtliche Versuchsbeispiele konnten nach der Extrusion auf eine Rolle aufgewickelt und ohne ein Verblocken gelagert werden, wobei die Stützfolie 3 nach einem Abrollen von der elastischen Folie 2 bzw. der dehnbare Folie 7 vollständig abgezogen werden konnte.

## Patentansprüche

1. Coextrusionsfolie, die an einem inneren Schichtübergang (1) in eine einschichtige elastische Folie (2) aus thermoplastischem Elastomer und eine Stützfolie (3) trennbar ist, wobei die elastische Folie (2) eine erste Oberfläche der Coextrusionsfolie bildet und wobei die Stützfolie (3) an dem inneren Schichtübergang (1) eine Releaseschicht (4) aus nicht elastischem polaren Polymer aufweist.

2. Coextrusionsfolie nach Anspruch 1, wobei die elastische Folie (2) aus Styrol-Block-Copolymer besteht.

3. Coextrusionsfolie die an einem inneren Schichtübergang (1) in eine dehnbare Folie (7) und eine Stützfolie (3) trennbar ist, wobei die dehnbare Folie (7) eine elastische Schicht (2') aus thermoplastischem Elastomer sowie eine Schicht (8) aus einem dehnbaren Polymer aufweist und wobei die Stützfolie (3) an dem inneren Schichtübergang (1) eine Releaseschicht (4) aus nicht elastischem polaren Polymer aufweist.

4. Coextrusionsfolie nach Anspruch 3, wobei die dehnbare Folie (7) zweischichtig ausgebildet ist.

5. Coextrusionsfolie nach Anspruch 3 oder 4, wobei die elastische Schicht (2') aus Styrol-Block-Copolymer besteht.

6. Coextrusionsfolie nach einem der Ansprüche 3 bis 5, wobei die Schicht (8) der dehnbaren Folie (7) eine Dicke von weniger als 20 µm, vorzugsweise weniger 10 µm, aufweist.

7. Coextrusionsfolie nach einem der Ansprüche 1 bis 6, wobei die an den Schichtübergang (1) angrenzenden Schichten eine unterschiedliche Polarität aufweisen.

8. Coextrusionsfolie nach einem der Ansprüche 1 bis 7, wobei die Releaseschicht (4) als polymere Grundsubstanz ein Polymer auswählt aus der Gruppe Polyamid (PA), Polymethylmethacrylat (PMMA), Polyoxymethylen (POM), Polycarbonat (PC), Polyethylenterephthalat (PET), Polybutylenterephthalat (PBT) oder eine Mischung zumindest zwei dieser Polymere aufweist.

9. Coextrusionsfolie nach einem der Absprüche 1 bis 8, wobei die Stützfolie zusätzlich zu der Releaseschicht (4) eine Trägerschicht (5) aufweist, welche eine zweite Oberfläche der Coextrusionsfolie bildet.

10. Coextrusionsfolie nach Anspruch 9, wobei die Trägerschicht (5) aus Polyolefin besteht und durch eine Haftvermittlerschicht (6) mit der Releaseschicht (4) verbunden ist.

11. Coextrusionsfolie nach Anspruch 9 oder 10, wobei die Releaseschicht (4) eine Dicke von weniger als 20 µm, vorzugsweise weniger als 10 µm, aufweist.

12. Coextrusionsfolie nach einem der Ansprüche 1 bis 11, wobei die Verbundhaftung für eine Trennung an dem inneren Schichtübergang zwischen 0,005 N/25 mm und 4 N/25 mm, vorzugsweise zwischen 0,01 N/25mm und 1 N/25mm liegt.

13. Verfahren zur Herstellung eines Verbundstoffes,
wobei eine Coextrusionsfolie gebildet wird, die an einer ersten Oberfläche eine Schicht aus thermoplastischem Elastomer aufweist und die an einem inneren Schichtübergang in eine die Schicht aus thermoplastischem Elastomer umfassende Folie und eine Stützfolie trennbar ist,
wobei die Coextrusionsfolie auf eine Rolle aufgewickelt wird,
wobei die Coextrusionsfolie von der Rolle abgezogen wird,
wobei zumindest eine Nonwovenbahn zugeführt wird und
wobei die Stützfolie entfernt wird, unmittelbar bevor die Nonwovenbahn mit der Folie kaschiert wird, welche die Schicht aus thermoplastischem Elastomer aufweist.

14. Verfahren nach Anspruch 13, wobei die Coextrusionsfolie vor dem Entfernen der Stützfolie in Streifen geschnitten wird und wobei die nach dem Abziehen der Stützfolie verbleibenden Streifen der Folie, welche die Schicht aus thermoplastischem Elastomer aufweist, voneinander in Querrichtung beabstandet zwischen zwei flächige nicht elastische Nonwovenbahnen einkaschiert werden, so dass sich in Querrichtung des gebildeten Verbundstoffes Bereiche, die nach einer Dehnung eine elastische Rückstellung aufweisen, mit nicht elastischen Bereichen abwechseln.

15. Verwendung einer Coextrusionsfolie für die Herstellung von Verbundstoffelementen mit der Maßgabe, dass die Coextrusionsfolie an einem inneren Schichtübergang (1) in eine einschichtige elastische Folie (2) aus thermoplastischem Elastomer und eine Stützfolie (3) trennbar ist, wobei die elastische Folie (2) eine erste Oberfläche der Coextrusionsfolie bildet.

16. Verwendung einer Coextrusionsfolie für die Herstellung von Verbundstoffelementen mit der Maßgabe, dass die Coextrusionsfolie an einem inneren Schichtübergang (1) in eine dehnbare Folie (7) und eine Stützfolie (3) trennbar ist, wobei die dehnbare Folie (7) eine elastische Schicht (2') aus thermoplastischem Elastomer sowie eine Schicht (8) aus einem dehnbaren Polymer aufweist.

## Claims

1. A coextrusion film, which at an internal layer transition (1) can be separated into a single-layered elastic film (2) of thermoplastic elastomer and a supporting film (3), wherein the elastic film (2) forms a first surface of the coextrusion film, and wherein the supporting film (3) has on the internal layer transition (1) a release layer (4) of an inelastic polar polymer.

2. The coextrusion film in accordance with Claim 1, wherein the elastic film (2) consists of a styrene block copolymer.

3. A coextrusion film, which at an internal layer transition (1) can be separated into an extensible film (7) and a supporting film (3), wherein the extensible film (7) has an elastic layer (2') of thermoplastic elastomer and also a layer (8) of an extensible polymer, and wherein the supporting film (3) has on the inner layer transition (1) a release layer (4) of an inelastic polar polymer.

4. The coextrusion film in accordance with Claim 3, wherein the extensible film (7) is composed of two layers.

5. The coextrusion film in accordance with Claim 3 or 4, wherein the elastic layer (2') consists of a styrene block copolymer.

6. The coextrusion film in accordance with one of the Claims 3 to 5, wherein the layer (8) of the extensible film (7) has a thickness of less than 20 µm, preferably less than 10 µm.

7. The coextrusion film in accordance with one of the Claims 1 to 6, wherein the layers adjacent at the layer transition (1) have differing polarity.

8. The coextrusion film in accordance with one of the Claims 1 to 7, wherein the release layer (4) has as a polymeric basic substance a polymer selected from the group polyamide (PA), polymethylmethacrylate (PMMA), polyoxymethylene (POM), polycarbonate (PC), polyethylene-terephthalate (PET), polybutylenterephthalate (PBT), or a mixture of at least two of these polymers.

9. The coextrusion film in accordance with one of the Claims 1 to 8, wherein the supporting film in addition to the release layer (4) has a carrier layer (5), which forms a second surface of the coextrusion film.

10. The coextrusion film in accordance with Claim 9, wherein the carrier layer (5) consists of polyolefin and by means of a bonding agent layer (6) is connected with the release layer (4).

11. The coextrusion film in accordance with Claim 9 or 10, wherein the release layer (4) has a thickness of less than 20 µm, preferably less than 10 µm.

12. The coextrusion film in accordance with one of the Claims 1 to 11, wherein the adhesive force for detachment at the inner layer transition lies between 0.005 N / 25 mm and 4 N / 25 mm, preferably between 0.01 N / 25 mm und 1 N / 25 mm.

13. A method for the manufacture of a composite material, wherein
a coextrusion film is formed, which at a first surface has a layer of thermoplastic polymer and which at an internal layer transition can be separated into a film comprising the layer of thermoplastic polymer and a supporting film, wherein
the coextrusion film is wound up onto a reel, wherein
the coextrusion film is pulled off the reel, wherein
at least one non-woven web is supplied, and wherein
the supporting film is removed, immediately before the non-woven web is laminated with the film, which has the layer of thermoplastic polymer.

14. The method in accordance with Claim 13, wherein the coextrusion film, before the removal of the supporting film, is cut into strips, and wherein the strips of the film that has the layer of thermoplastic polymer, remaining after the supporting film has been pulled off, are laminated in between two planar inelastic non-woven webs, spaced apart from one another in the transverse direction, such that in the transverse direction of the composite material formed regions that after extension exhibit an elastic recovery alternate with inelastic regions.

15. Use of a coextrusion film for the manufacture of composite material elements with the requirement that at an internal layer transition (1) the coextrusion film can be separated into a single-layered elastic film (2) of thermoplastic elastomer and a supporting film (3), wherein the elastic film (2) forms a first surface of the coextrusion film.

16. Use of a coextrusion film for the manufacture of composite material elements with the requirement that at an internal layer transition (1) the coextrusion film can be separated into an extensible film (7) and a supporting film (3), wherein the extensible film (7) has an elastic layer (2') of thermoplastic elastomer and also a layer (8) of an extensible polymer.

## Revendications

1. Film coextrudé qui est séparable au niveau d'une transition intérieure entre les couches (1) en un film élastique monocouche (2) en élastomère thermoplastique et en un film support (3), le film élastique (2) formant une première surface du film coextrudé et le film support (3) présentant au niveau de la transition intérieure entre les couches (1) une couche de détachement (4) en polymère polaire non élastique.

2. Film coextrudé selon la revendication 1, le film élastique (2) étant composé de copolymère bloc styrène.

3. Film coextrudé qui, au niveau d'une transition intérieure entre les couches (1), est séparable en un film étirable (7) et un film support (3), le film étirable (7) présentant une couche élastique (2') en élastomère thermoplastique ainsi qu'une couche (8) en polymère étirable et le film support (3) présentant, au niveau de la transition intérieure entre les couches (1), une couche de détachement (4) en polymère polaire non élastique.

4. Film coextrudé selon la revendication 3, le film étirable (7) étant réalisé en deux couches.

5. Film coextrudé selon la revendication 3 ou 4, la couche élastique (2') étant composée de copolymère bloc styrène.

6. Film coextrudé selon une des revendications 3 à 5, la couche (8) de film étirable (7) ayant une épaisseur inférieure à 20 µm, de préférence inférieure à 10 µm.

7. Film coextrudé selon une des revendications 1 à 6, les couches adjacentes à la transition entre les couches (1) présentant une polarité différente.

8. Film coextrudé selon une des revendications 1 à 7, la couche de détachement (4) présentant comme substance polymérique de base un polymère sélectionné dans le groupe composé du polyamide (PA), polyméthylméthacrylate (PMMA), polyoxyméthylène (POM), polycarbonate (PC), polyéthylène téréphtalate (PET), polybutylène téréphtalate (PBT) ou un mélange d'au moins deux de ces polymères.

9. Film coextrudé selon une des revendications 1 à 8, le film support présentant en plus de la couche de détachement (4) une couche porteuse (5) qui constitue une seconde surface du film coextrudé.

10. Film coextrudé selon la revendication 9, la couche porteuse (5) étant composée de polyoléfine et étant reliée par une couche promotrice d'adhérence (6) à la couche de détachement (4).

11. Film coextrudé selon la revendication 9 ou 10, la couche de détachement (4) ayant une épaisseur inférieure à 20 µm, de préférence inférieure à 10 µm.

12. Film coextrudé selon une des revendications 1 à 11, l'adhérence composite pour une séparation au niveau de la transition intérieure entre les couches (1) étant comprise entre 0,005 N/25 mm et 4 N/25 mm, de préférence entre 0,01 N/25 mm et 1 N/25 mm.

13. Procédé de fabrication d'un matériau composite,
dans lequel est formé un film coextrudé qui présente, au niveau d'une première surface, une couche en élastomère thermoplastique et qui est peut être séparé au niveau d'une transition intérieure entre les couches en un film comprenant la couche en élastomère thermoplastique et un film support,
le film coextrudé étant enroulé sur un rouleau,
le film coextrudé étant tiré du rouleau,
au moins une bande de non-tissé étant acheminée et
le film étant enlevé juste avant que la bande de non-tissé soit plaquée avec le film comportant la couche en élastomère thermoplastique.

14. Procédé selon la revendication 13, le film coextrudé étant découpé en bandes avant d'enlever le film support et les bandes de film restant après le retrait du film support et comportant la couche en élastomère thermoplastique étant plaquées espacées les unes des autres dans le sens transversal entre deux bandes de non-tissé planes non élastiques de manière à ce que, dans le sens transversal du matériau composite formé, des zones présentant un rappel élastique après étirement alternent avec des zones élastiques.

15. Utilisation d'un film coextrudé pour la fabrication d'éléments en matériau composite en veillant à ce que le film coextrudé soit séparable au niveau d'une transition intérieure entre les couches (1) en un film élastique monocouche (2) en élastomère thermoplastique et en un film support (3), le film élastique (2) formant une première surface du film coextrudé.

16. Utilisation d'un film coextrudé pour la fabrication d'éléments en matériau composite en veillant à ce que le film coextrudé soit séparable au niveau d'une transition intérieure entre les couches (1) en un film étirable (7) et un film support (3), le film étirable (7) présentant une couche élastique (2') en élastomère thermoplastique et une couche (8) en polymère étirable.
